# EUROPÄISCHE PATENTSCHRIFT

(11) **EP 2 565 597 B1**
(45) Veröffentlichungstag und Bekanntmachung des Hinweises auf die Patenterteilung: **15.07.2015**
(21) Anmeldenummer: 12180187.2
(22) Anmeldetag: 10.08.2012
(51) Int. Cl.: G01G 19/44, G01G 21/22, G01G 23/37

(54) **Waage**
Scale
Balance

(30) Priorität: 31.08.2011 DE 102011053128
(43) Veröffentlichungstag der Anmeldung: 06.03.2013
(73) Patentinhaber: Leifheit AG, 56377 Nassau (DE)
(72) Erfinder: Denk, Andre, 45131 Essen (DE)
(74) Vertreter: Bungartz, Klaus Peter

(56) Entgegenhaltungen:
- EP-A1- 2 354 771
- DE-A1-102005 051 757
- DE-U1-202008 008 194

## Beschreibung

Die Erfindung betrifft eine Waage nach dem Oberbegriff des Anspruchs 1.

Insbesondere betrifft die Erfindung eine Waage mit einem kapazitiven Näherungssensor, der zumindest eine, an der Tragplatte angeordnete Elektrode aufweist.

Eine Waage dieser Art ist aus der EP 1 371 954 A2 bekannt. Diese Waage weist eine Tragplatte auf, die sich über Wägezellen, die an den Ecken der rechteckigen Tragplatte angeordnet sind, auf einem Untergrund abstützt. Dies kann entweder ein unteres Gehäuse sein, in dem alle vier Wägezellen gehalten sind, oder auch die Standfläche für die Waage, wobei dann jede Wägezelle in einem separaten Teilgehäuse gehalten ist.

Zum Einschalten dieser Waage und für die Aktivierung bzw. Deaktivierung weiterer Funktionen der Waage ist hier ein kapazitiver Näherungssensor vorgesehen, der die Umgebungskapazität seiner Elektrode überwacht und bei Änderung dieser Kapazität einen Schaltvorgang auslöst. Die Elektrode ist in Form einer elektrisch leitfähigen Schicht an der Tragplatte angeordnet.

In der jüngeren Vergangenheit werden Waagen zunehmend kleiner und auf das Wesentliche beschränkt. So weisen moderne Waagen beispielsweise eine Tragplatte aus Glas auf, die über vier kleine Gehäuseelemente gelagert, in denen sich die Wägezellen befinden, auf einem Untergrund steht.

Insbesondere bei Küchenwaagen oder Briefwaagen wird dabei darauf geachtet, dass die Waagen möglichst klein sind. Andererseits muss eine Waage zwangsläufig eine Anzeigevorrichtung zum Anzeigen des Wiegeergebnisses, wenigstens einen Ein- und ggfs. Ausschalter sowie die Tragplatte aufweisen. Es ist zwar bekannt, die Anzeigevorrichtung von der Waage zu trennen und als separates Bauteil, das drahtlos mit der Elektronik der Waage kommuniziert, auszubilden, jedoch erfordert dies zusätzlichen Aufwand, der insbesondere bei einfachen Küchenwaagen oder Briefwaagen oft nicht gewünscht ist.

Durch die drei zwangsweise vorhandenen Funktionsbereiche wird allerdings eine gewisse Mindestbreite bzw. -länge erzwungen. Vor dem Hintergrund, dass die Wägezellen üblicherweise einige Zentimeter nach innen versetzt sind und im Bereich zwischen dem äußeren Rand der Waage und den Wägezellen keine Schalter angeordnet werden sollten, weil ansonsten die Gefahr eines Kippens der Waage bestehen würde, müssen die Schalter zwischen zwei gegenüberliegenden Wägezellen im mittleren Bereich der Waage angeordnet werden.

Auch bei berührungslosen Schaltern sollte dies so sein, da oft der Benutzer trotz der Tatsache, dass es zum Schalten auf eine Berührung gar nicht ankommt, dazu neigt, auf die entsprechende Fläche zu drücken. Es besteht also auch bei diesen berührungslosen Schaltern die Gefahr, dass die Waage kippt.

Der Nachteil der bekannten Waagen besteht somit darin, dass sie in der Breite und/oder der Länge nicht beliebig verkleinert werden kann, ohne dass ihre Funktion beeinträchtigt würde.

Aus der DE 20 2008 008 194 U1 ist eine Waage bekannt, die eine rahmenlose Plattform zum Aufnehmen eines zu wiegenden Objektes aufweist, wobei die Anzeige unterhalb oder innerhalb der durchsichtigen Plattform vorgesehen ist Ferner ist die Plattform bei einer in diesem Dokument beschriebenen Ausführungsform mit berührungsempfindlichen Eingabemitteln versehen:

Auch hier besteht der Nachteil dieser Waage darin, dass zwar die Anzeigevorrichtung unterhalb oder innerhalb der Plattform vorgesehen ist, dennoch aber eine Überlagerung der Anzeigevorrichtung mit einem Schalter zum Schalten einer Funktion der Waage nur dann möglich ist, wenn die Anzeigevorrichtung als aktiver Bildschirm ausgebildet ist und berührungsempfindlich im Sinne eines Touch-Screens ist. Dies bringt aber den weiteren Nachteil mit sich, dass zum einen ein solcher berührungsempfindlicher Bildschirm vergleichsweise kostenintensiv ist und zum anderen die Oberfläche dieses Bildschirms empfindlich ist, was insbesondere bei Küchenwagen, die häufig in der Hektik des Zubereitung von Speisen einer Verschmutzung ausgesetzt sind oder auf deren Plattform auch heiße Gegenstände abgestellt werden können, nachteilig ist.

Ferner sind Waagen bekannt, die mit Elektroden an der Tragplatte versehen sind, wobei diese Elektroden bei den bekannten Waagen zur Messung des Körperfettanteils genutzt werden. Ein Beispiel einer solchen Waage ist aus der WO 2006/1 36368 bekannt.

Bei diesen Waagen werden Elektroden verwendet, um den Körperwiderstand als zusätzlich auswertbares Signal messen zu können. Diese Elektroden sind dann, da der Benutzer ja mit nackten Füßen auf der leitfähigen Schicht stehen muss, in Bereich der Tragplatte angeordnet. Sie werden allerdings nicht zum Einschalten bzw. zum Aktivieren einer sonstigen Funktion der Waage benutzt.

Insbesondere bei Küchenwaagen wäre eine Übertragung der Elektroden auf die Tragplatte schwierig, da Küchenwaagen oft auch mit hohen Temperaturen belastet werden, wenn zum Beispiel ein heißer Topf auf die Tragplatte gestellt wird.

Aufgabe der Erfindung ist es daher, eine Waage zu schaffen, die in ihrer Gestaltungsfreiheit vielseitiger ist.

Diese Aufgabe wird nach der Erfindung durch eine Waage nach Anspruch 1 gelöst. Grundsätzlich kann die Schaltfläche jedes geeignete Meßprinzip umsetzen, mit dem der Benutzer einen Schaltvorgang auslösen kann und das eine durchsichtige Schaltfläche erlaubt, die oberhalb der Anzeigevorrichtung angeordnet werden kann. Die kann zum Beispiel das Bedrucken mit einer durchsichtigen elektrisch leitfähigen Fläche umfassen, deren Widerstand gemessen wird. Der Benutzer kann dann durch Auflegen eines Fingers oder sonstigen Körperteils diesen Widerstand manipulieren und den Schalter betätigen. Eine Waage nach der Erfindung verwendet als Schalter einen kapazitiven Näherungssensor mit wenigstens einer Elektrode, die Elektrode als Schaltfläche fungiert und an der Tragplatte angeordnet ist. Hier ist die oberhalb der Anzeigevorrichtung positionierte Elektrode in einem derartigen Umfang im sichtbaren Bereich durchsichtig, dass durch die Elektrode der funktionale Bereich der Anzeigevorrichtung, also die Bereiche, die der Benutzer ablesen möchte, sichtbar ist.

Durch die erfindungsgemäße Ausgestaltung der Waage wird es nun möglich, die Anzeigevorrichtung und die Elektrode zum Schalten einer Funktion der Waage oder zum Einschalten der Waage übereinander zu legen. Dies bedeutet, dass der Schaltbereich, also diejenige Oberflächenbereich, an dem sich die Schalter befinden, nicht mehr rechts oder links der Anzeigevorrichtung angeordnet werden muss.

Auf diese Weise kann zum einen die Anzeigevorrichtung vergrößert werden oder andererseits die Tragplatte, die im vorderen oder hinteren Bereich die Anzeigevorrichtung und den bzw. die Schalter beinhaltet und damit in ihrer Breite bzw. Länge ebenfalls von der Kombination der Anzeigevorrichtung mit dem Schalter bestimmt ist, verkleinert werden. Ein besonderer Vorzug der Erfindung besteht also darin, dass nunmehr neben der Anzeigevorrichtung kein besonderer Funktionsraum mehr vorgesehen werden muss.

Die Elektrode kann oberhalb oder unterhalb der Tragplatte angeordnet sein. Sofern sie unterhalb der Tragplatte angeordnet ist, ist die Tragplatte elektrisch nicht leitfähig, damit eine oberhalb der Tragplatte durch die Anwesenheit des Fußes, der Hand oder sonstigen Körperteils des Benutzers und die damit einhergehende Änderung der Kapazität von der unterhalb der Tragplatte angeordneten Elektrode erfasst werden kann.

Besonders bevorzugt ist die Elektrode als elektrisch leitfähige Folie ausgebildet, die auf die Waage aufgeklebt sein kann. Alternativ kann die Elektrode auch aufgedampft oder aufgedruckt werden, wobei bevorzugt eine so genannte ITO-Elektrode, also eine Indiumzinnoxid-Elektrode verwendet wird. Diese Elektroden sind dem Fachmann allgemein bekannt und bestehen aus einem Werkstoff, der als Halbleiter in sichtbaren Bereich weit gehend transparent ist jedoch eine gute elektrische Leitfähigkeit aufweist.

Durch die erfindungsgemäße Ausgestaltung wird es nun möglich, die Anzeigevorrichtung und die Elektrode unabhängig voneinander vorzusehen, wobei die Elektrode zumindest mit einem Abschnitt oberhalb der Anzeigevorrichtung bevorzugt vollständig oberhalb der Anzeigevorrichtung angeordnet ist.

Im einfachsten Fall kann eine einzelne Elektrode verwendet werden, um zum Beispiel eine Briefwaage oder eine sonstige Waage einzuschalten, wobei die Ausschaltfunktion über die Zeit oder auch über diese Elektrode gesteuert werden kann. Bei einer solchen Ausgestaltung wird nach dem Einschalten der Waage oder auch nach dem späteren Betätigen des Schalters bei bereits eingeschalteter Waage die so genannte Tara-Funktion ausgelöst, d.h. die Waage wird zum Schaltzeitpunkt relativ zu dem auf der Tragplatte befindlichen Gewicht auf null gesetzt.

Alternative Ausgestaltungen der Erfindung weisen mehrere Elektroden auf, die unabhängige Funktionen voneinander besitzen können. Auch diese Elektroden können ganz oder teilweise oberhalb der zum Beispiel als digitales Display, insbesondere in Form eines LED oder LCD Displays, ausgebildeten Ausgabevorrichtung angeordnet sein.

Eine weitere bevorzugte Ausgestaltung der Erfindung verwendet die auf der Tragplatte, in der Tragplatte oder unter der Tragplatte angeordneten Elektroden um weitere Funktionen zu ermöglichen. So ist es zum Beispiel möglich, dass in einem Display, das die Ausgabevorrichtung bildet, ein vollständiges Bedienmenü angezeigt wird. Hierzu wird bevorzugt ein Pixeldisplay verwendet, das mit einer gewissen Mindestauflösung fähig ist, wie bei Kleincomputern üblich, ein Bedienmenü anzuzeigen.

Das Bedienmenü kann zum Beispiel so ausgebildet sein, das es zeitlich hintereinander versetzt die Eingabemöglichkeiten angibt und nach Abschluss eines Wiegevorgangs entweder vollständig in einen Anzeigemodus umgeschaltet und das Ergebnis des Wiegevorgangs anzeigt oder in einem Teilbereich des Bedienmenüs das Ergebnis des Wiegevorgangs wiedergibt.

Auch in diesem Fall ist erfindungsgemäß die Elektrode zumindest teilweise oder einer der Elektroden oberhalb des Bedienmenüs angeordnet. Besonders vorteilhaft ist es hierbei, wenn mehrere Bedienmenüs hierarchisch miteinander verschachtelt verwendet werden. Hier sind dann nebeneinander wenigstens zwei Elektroden angeordnet. Ähnlich wie dies von Tablett-PCs bekannt ist, kann der Benutzer dann zwischen den einzelnen Bedienmenüs hin und her schalten, indem er von rechts nach links oder von links nach rechts mit der Hand oder einem sonstigen Körperteil an den Elektroden entlangfährt und so zunächst die Kapazität der ersten und anschließend der zweiten Elektrode verändert. Die Elektronik der Waage kann dies dann als Befehle interpretieren, innerhalb der Hierarchie der Bedienmenüs zu wechseln und jeweils ein anderes Bedienmenü anzuzeigen.

Natürlich kann auf diese Weise auch eine sonstige Multifunktionalität der Bedienschalter realisiert werden, so zum Beispiel ein Bewegen des Körperteils von rechts nach links einem Bedienbefehl und eine Bewegung in die entgegengesetzte Richtung dann einem anderen Bedienbefehl entspricht. Bei vier oder mehr Elektroden kann dies auch über mehrere Richtungen (diagonal, von oben nach unten, von rechts nach links und jeweils umgekehrt) vervielfacht werden.

So können über vier Elektroden, die in einem Rechteck nebeneinander oder übereinander angeordnet sind, 6 Paare von Bedienbefehlen oder 12 Einzelbefehle erzeugt werden: Übereinander zwei mögliche Querbewegungen, nebeneinander zwei mögliche vertikale Bewegungen und zwei mögliche diagonale Bewegungen ergeben 6 unterschiedliche Kapazitätsänderungen, die jeweils in der Richtung umkehrbar sind, also 12 möglichen Befehlen entsprechen.

Auf diese Weise lassen sich Funktionen realisieren, die einem Touch-Screen ähnlich sind, ohne dass hierfür der drucksensitive Bildschirm notwendig wäre, der im Falle einer Waage in der Regel den Kostenrahmen sprengen würde. Die oberhalb der Anzeigevorrichtung angeordneten Elektroden sind dabei ohnehin vorhanden, so dass die Fähigkeit, zwischen einzelnen Bedienmenüs oder mehreren Funktionen durch sequenzielle Betätigen der einzelnen Schalter, die den jeweiligen Elektroden zugeordnet sind, ohne großen zusätzlichen Aufwand technisch realisierbar sind.

Dabei können zwei über- oder nebeneinander angeordnete Elektroden bereits ausreichen, alternativ kann auch ein Satz von vier oder mehr Elektroden verwendet werden, die zum Beispiel neben- und übereinander angeordnet sind. Diese können sich auch über die Waage verteilen, wenn dies mit der Grundfunktion der Waage, insbesondere wegen der Temperaturfestigkeit, vereinbar ist.

Die Erfindung kann mit jeder Art von Waagen umgesetzt werden. Insbesondere kann die erfindungsgemäße Waage eine Küchenwaage, eine Personenwaage oder eine Briefwaage sein.

Weitere Merkmale und Vorteile der Erfindung ergeben sich aus den Unteransprüchen und aus der nachfolgenden Beschreibung eines bevorzugten Ausführungsbeispiels.

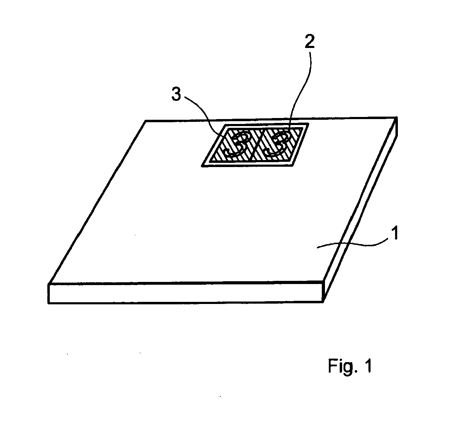

In Figur 1 ist eine erfindungsgemäße Waage dargestellt, die eine Anzeigevorrichtung 2 aufweist. Im dargestellten Ausführungsbeispiel befindet sich die Anzeigevorrichtung 2 im oberen Bereich der Tragplatte 1 in der Mitte der Waage.

Ist hier schematisch eine Personenwaage dargestellt, die Waage kann aber grundsätzlich jede Form und Ausgestaltung aufweisen. Oberhalb der Anzeigevorrichtung 2 befindet sich, dargestellt durch die schraffierten Bereiche, die Elektrode 3 zum Einschalten der Waage sowie zum Auslösen der Tara-Funktion. Im dargestellten Ausführungsbeispiel wird nur eine Elektrode 3 verwendet.

Alternativ können natürlich auch mehrere Elektroden 3 eingesetzt werden, wobei es selbstverständlich ist, dass diese Elektroden 3 auch außerhalb der Anzeigevorrichtung 2 angeordnet sein können. Wesentlich für die vorliegende Erfindung ist die Tatsache, dass die Elektroden 3 so ausgebildet sind, dass sie zumindest abschnittsweise auch oberhalb der Anzeigevorrichtung 2 liegen können, wobei die Elektroden 3 durch ihre durchsichtige Eigenschaft so ausgebildet sind, dass sie das Ablesen der Anzeigevorrichtung 2 nicht oder nur unwesentlich beeinträchtigen.

Durch die erfindungsgemäße Möglichkeit der Anordnung der Elektrode 3 oberhalb der Anzeigevorrichtung 2 wird nun die Gestaltungsvielfalt für den Designer der Waage wesentlich erhöht. Er muss die beiden Funktionsbereiche, Schalter mit Elektrode 3 einerseits und Anzeigevorrichtung 2 andererseits, nicht mehr getrennt voneinander vorsehen sondern kann diese auch überlagern, so dass zum Beispiel die Breite der Waage verringert werden kann oder alternativ auch die Anzeigevorrichtung 2 in ihrer Breite vergrößert werden kann.

### Bezugszeichentiste:

- 1: Trag platte
- 2: Anzeigevorrichtung
- 3: Elektrode des kapazitiven Sensors

## Patentansprüche

1. Waage mit
- einer Tragplatte (1) zur Aufnahme einer zu wiegenden Last,
- einer Auswerteelektronik zur Bestimmung des Gewichts der auf der Tragplatte (1) befindlichen Last,
- einer an der Tragplatte angeordneten Anzeigevorrichtung (2) zur Anzeige des Wiegeergebnis und
- zumindest einem, an der Tragplatte (1) angeordneten, als kapazitiver Näherungssensor mit zumindest einer Elektrode (3) ausgebildetem Schalter zur Bedienung und/oder Aktivierung einer Funktion der Waage, der derart ausgebildet ist, dass bei Annähern oder Berühren der Schaltfläche eine Schaltfunktion ausgelöst wird, wobei
- der kapazitive Näherungssensor zumindest eine an der Tragplatte (1) angeordnete Elektrode (3) aufweist,
**dadurch gekennzeichnet, dass**
die von der Anzeigevorrichtung (2) unabhängige Elektrode (3) im sichtbaren Bereich durchsichtig ausgebildet und oberhalb der Anzeigevorrichtung (2) angeordnet ist, wobei der durch den Benutzer abzulesende, funktionale Bereich der Anzeigevorrichtung (2) durch die Elektrode (3) sichtbar ist, wobei die Schaltfunktion das Einschalten der Waage ist.

2. Waage nach Anspruch 1, **dadurch gekennzeichnet, dass** die Anzeigevorrichtung (2) derart ausgebildet ist, dass sie bis zur Betätigung des Schalters unterhalb der Schaltfläche die Funktion des Schalters anzeigt.

3. Waage nach einem der beiden vorhergehenden Ansprüche, **dadurch gekennzeichnet, dass** oberhalb der Anzeigevorrichtung (2), neben und/oder übereinander angeordnet, mehrere als Elektroden (3) eines kapazitiven Näherungssensors ausgebildete Schaltflächen vorgesehen sind, wobei jede Schaltfläche einem separaten Schalter zugeordnet ist.

4. Waage nach dem vorhergehenden Anspruch, **dadurch gekennzeichnet, dass** die Waage eine Steuerung aufweist, die über zwei oder mehr Bedienmenüs bedienbar ist, wobei die Bedienmenüs in der Anzeigevorrichtung (2) hintereinander anzeigbar sind und ein Zurückblättern durch sequentielles Betätigen der Schaltflächen in einer Richtung und ein Vorblättern von einem Bedienmenü zu einem anderen Bedienmenü durch sequentielles Betätigen der Schaltflächen in die entgegengesetzte Richtung erfolgt.

5. Waage nach einem der vorhergehenden Ansprüche, **dadurch gekennzeichnet, dass** der Schalter ein Schalter zum Einschalten der Waage ist und nach Beendigung einer Tarafunktion mit anschließendem Wechsel in die Funktionsbereitschaft der Waage deaktiviert ist, wobei die Anzeigevorrichtung (2) während der Funktionsbereitschaft der Waage das Wiegeergebnis und außerhalb der Funktionsbereitschaft die Schalterfunktion anzeigt.

6. Waage nach einem der vorhergehenden Ansprüche, **dadurch gekennzeichnet, dass** sich die Anzeigevorrichtung (2) mit Ausnahme eines Randes der an zumindest einer Seite der Tragplatte (1) kleiner als 10cm, bevorzugt kleiner als 5cm und weiter bevorzugt kleiner als 2cm ist, über den vollständigen Bereich der Tragplatte (1) erstreckt.

7. Waage nach einem der vorhergehenden Ansprüche, **dadurch gekennzeichnet, dass** sie eine rechteckige Form aufweist und die Anzeigevorrichtung (2) mittig im vorderen Bereich der Tragplatte (1) oder mittig im hinteren Bereich der Tragplatte (1) angeordnet ist, wobei dieTragplatte (1) auf vier in den Eckbereichen angeordnete Wägezellen aufliegt und die Anzeigevorrichtung (2) und die Schaltfläche zwischen zwei vorderen oder zwei hinteren, einander gegenüberliegenden Wägezellen angeordnet sind.

## Claims

1. Scales, with
- a support plate (1) for receiving a load to be weighed,
- evaluation electronics for determining the weight of the load located on the support plate (1),
- a display device (2) mounted on the support plate, for displaying the weigh result, and
- at least one switch, located on the support plate (1) and designed as a capacitive proximity sensor with at least one electrode (3), for operating and/or activating a function of the scales, designed in such a way that a switching function is triggered when the interface is approximated or contacted, whereby
- the capacitive proximity sensor comprises at least one electrode (3) mounted on the support plate (1),
**characterised in that**
the electrode (3), independent from the display device (2), is designed transparentfy in the visible area and mounted above the display device (2), whereby the functional area of the display device (2) to be read by the user is visible through the electrode (3), whereby the switching function is switching on the scales.

2. Scales according to claim 1, **characterised in that** the display device (2) is designed in such a way that it displays the function of the switch under the interface until the switch is activated.

3. Scales according to one of the two preceding claims, **characterised in that** several interfaces, designed as electrodes (3) of a capacitive proximity sensor, are located above the display device (2), next to and/or above each other, whereby each interface is associated with a separate switch.

4. Scales according to the preceding claim, **characterised in that** the scales comprise a controller, operatable via two or more operating menus, whereby the operating menus can be displayed one after the other on the display device (2) and scrolling back is realised by sequential activation of the interface in one direction, whilst scrolling forward from one operating menu to another operating menu is realised by sequential activation of the interfaces in the opposite direction.

5. Scales according to one of the preceding claims, **characterised in that** the switch is a switch for switching on the scales and is deactivated following completion of the tare function, with subsequent deactivating change to operational readiness of the scales, whereby the display device (2) displays the weigh result during operational readiness of the scales, and the switch function outside of operational readiness.

6. Scales according to one of the preceding claims, **characterised in that** the display device (2) extends across the entire area of the support plate (1) with the exception of one edge that is smaller than 10 cm, preferably smaller than 5 cm, and more preferably smaller than 2 cm, on at least one side of the support plate (1).

7. Scales according to one of the preceding claims, **characterised in that** they have a rectangular form and the display device (2) is located centrally in the front area of the support plate (1), or centrally in the rear area of the support plate (1), whereby the support plate (1) lies on four weighing cells positioned in the corner areas, and the display device (2) and the interface are located between two front or two back weighing cells that oppose each other.

## Revendications

1. Balance équipée
- d'une plaque de support (1) destinée à la réception d'une charge à peser,
- d'une unité d'évaluation électronique destinée à déterminer le poids de la charge se trouvant sur ladite plaque de support (1),
- d'un dispositif d'affichage (2) placé sur ladite plaque de support et destiné à l'affichage du résultat de la pesée et
- d'au moins un capteur de proximité capacitif disposé sur ladite plaque de support (1) et doté d'au moins un interrupteur formé d'une électrode (3) et destiné à la commande et/ou à l'activation d'une fonction de ladite balance, conçu de telle sorte qu'une fonction de commutation est déclenchée à l'approche ou au contact du bouton de commutation,
- ledit capteur de proximité capacitif présentant au moins une électrode (3) disposée sur ladite plaque de support (1),
**caractérisée en ce que**
ladite électrode (3) indépendante dudit dispositif d'affichage (2) est configurée de manière transparente et disposée en dessus dudit dispositif d'affichage (2), la zone fonctionnelle à relever par l'utilisateur dudit dispositif d'affichage (2) étant visible à travers ladite électrode (3), la fonction de commutation étant la mise en marche de la balance.

2. Balance selon la revendication 1, **caractérisée en ce que** ledit dispositif d'affichage (2) est conçu de telle sorte qu'il affiche la fonction du commutateur jusqu'à l'actionnement du commutateur au-dessous du bouton de commutation.

3. Balance selon l'une des deux revendications précédentes, **caractérisée en ce qu'**au-dessus dudit dispositif d'affichage (2), sont prévus plusieurs boutons de commutation disposés à côté et/ou les uns sur les autres et conçus comme des électrodes (3) d'un capteur de proximité capacitif, chaque bouton de commutation étant attribué à un commutateur à part.

4. Balance selon la revendication précédente, **caractérisée en ce que** ladite balance présente une commande pouvant être actionnée par deux ou plusieurs menus de commande, les menus de commande pouvant être affichés les uns après les autres dans ledit dispositif d'affichage (2), permettant de faire défiler en arrière par un actionnement séquentiel des boutons de commutation dans un sens et de faire défiler en avant d'un menu de commande à un autre menu de commande par un actionnement séquentiel des boutons de commutation dans le sens inverse.

5. Balance selon l'une des revendications précédentes, **caractérisée en ce que** le commutateur est un commutateur en vue de mettre en marche la balance et est désactivé une fois une opération de tare terminée puis au passage à la disponibilité de la balance, ledit dispositif d'affichage (2) affichant le résultat de la pesée durant la disponibilité de la balance et la fonction de commutation en dehors de la disponibilité.

6. Balance selon l'une des revendications précédentes, **caractérisée en ce que** ledit dispositif d'affichage (2), à l'exception d'un bord étant plus petit que 10 cm sur au moins un côté de ladite plaque de support (1), est de préférence plus petit que 5 cm et mieux encore plus petit que 2 cm, s'étend sur toute la surface de ladite plaque de support (1).

7. Balance selon l'une des revendications précédentes, **caractérisée en ce qu'**elle présente une forme rectangulaire et ledit dispositif d'affichage (2) est disposé au centre dans la zone avant de ladite plaque de support (1) ou dans la zone arrière de ladite plaque de support (1), ladite plaque de support (1) étant disposée sur quatre cellules de pesage disposées dans les zones angulaires et ledit dispositif d'affichage (2) ainsi que le bouton de commutation étant disposés entre deux cellules de pesage avant ou deux arrière agencées face à face.
